# EUROPÄISCHE PATENTSCHRIFT

(11) **EP 2 762 220 B1**
(45) Veröffentlichungstag und Bekanntmachung des Hinweises auf die Patenterteilung: **18.03.2020**
(21) Anmeldenummer: 13153972.8
(22) Anmeldetag: 05.02.2013
(51) Int. Cl.: B01D 53/22, B01D 53/38, C10L 3/10, F02B 43/00

(54) **Verfahren und Vorrichtung zur Verwertung von Schwachgas**
Method and device for the utilisation of producer gas
Procédé et dispositif de récupération de gaz pauvre

(43) Veröffentlichungstag der Anmeldung: 06.08.2014
(73) Patentinhaber: Axiom Angewandte Prozeßtechnik Ges. m.b.H., 2443 Ebreichsdorf (AT)
(72) Erfinder: Szivacz, Johannes, 2484 Weigelsdorf (AT)
(74) Vertreter: Sonn & Partner Patentanwälte

(56) Entgegenhaltungen:
- EP-A2- 1 191 086
- EP-A2- 1 191 215
- DE-A1-102010 050 214
- DE-U1-202008 016 134

## Beschreibung

Die vorliegende Erfindung betrifft ein Verfahren und eine Vorrichtung zur Verwertung und/oder Behandlung von Schwachgas zur Erreichung gesetzlicher Emissionsgrenzwerte.

Schwachgase sind Brenngas-Gemische mit reduziertem Heizwert (z.B. unter 8,5 MJ/m³), die brennbaren Gase (für gewöhnlich Methan oder andere gasförmige Kohlenwasserstoffe, wie Wasserstoff und/oder Kohlenmonoxid) sind im Schwachgas mit nicht brennbaren Komponenten, wie z. B. Stickstoff (aus der Luft), Wasserdampf oder Kohlendioxid so stark verdünnt, dass eine selbstständige, stabile Oxidation (Verbrennung) nur mit hohem technischen und finanziellen Aufwand umgesetzt werden kann. Schwachgase sind zumeist frei von bzw. arm an Sauerstoff.

Schwachgase entstehen beispielsweise bei der biologisch-enzymatischen, anaeroben Zersetzung von organischem Material wie Klärschlamm und Gülle (Faulgas, Biogas) oder auf Mülldeponien (Deponiegas). Auch Kuppelgase aus der Montanindustrie werden bei geringem Heizwert als Schwachgas bezeichnet. Ebenso wird das bei der Holzvergasung entstehende Produktgas in der Literatur häufig als Schwachgas (LCV - low calorific value - gas) bezeichnet. Schwachgase entstehen auch im Bergbau bzw. in stillgelegten Bergwerken, insbesondere bei der Absaugung von Grubengas (wenn der Methangehalt des abgesaugten Grubengases beispielsweise 20 Vol.-% beträgt). Ein derartiges Schwachgas wäre vom Methangehalt her zwar theoretisch von alleine brennbar, enthält jedoch keinen Sauerstoff. Bei Zumischung von genügend Sauerstoff für die Verbrennung, beispielsweise in Form von Luft, fällt die Methankonzentration notwendigerweise auf unter 17,5 Vol.-%, wodurch für die Verbrennung dieses Gases Spezialbrenner zum Einsatz kommen müssen. Ein Beispiel dafür ist der sogenannte EFLOX-Brenner, mit dem eine Verbrennung eines Gasgemisches mit zwischen 2,5 und 17,5 Vol.-% Methan ohne Zusatzbrennstoff möglich ist

Allgemein nachteilig an Schwachgas ist, dass es aufgrund seines niedrigen Methangehalts thermisch nur schwierig zu verwerten ist, zur Strom- bzw. Energiegewinnung müssen Zündstrahlmotoren eingesetzt werden. Herkömmliche Gasmotoren benötigen zum Zwecke der Verstromung ein brennfähiges Gasgemisch, Motoren von BHKW's können bis ca. 38 Vol.-% CH₄ wirtschaftlich betrieben werden, Mikrogasturbinen bis 30 Vol.-%. Möglich ist daher die Verstromung von Grubengas oder vergleichbarer Gasarten mit einer minimalen CH₄-Konzentration von etwa 30 Vol.-%. Bei CH₄-Konzentrationen unterhalb dieses Grenzwertes ist eine Verstromung bzw. der Betrieb eines Gasmotors nur eingeschränkt, mit mit hohen Kosten verbundenem hohen technischen Aufwand bzw. gar nicht möglich.

Andererseits kann das oben beschriebene Schwachgas mit einer Methankonzentration von beispielsweise unter 17,5 Vol.-% oder auch unter 2,5 Vol.-% nicht ohne weiteres in die Atmosphäre abgeblasen werden, da Methan aufgrund seiner hohen Wirkung (25-mal so wirksam wie CO₂) mit rund 20 % zum anthropogenen Treibhauseffekt beiträgt, die Verweildauer von Methan in der Atmosphäre ist jedoch mit 9 bis 15 Jahren deutlich kürzer als bei CO₂. Der globale mittlere Methan-Gehalt der Atmosphäre hat sich seit vorindustriellen Zeiten (1750) von rund 600 ppb auf 1.750 ppb im Jahr 1999 erhöht. Im Zeitraum von 1999 bis 2006 blieb der Methan-Gehalt der Atmosphäre weitgehend konstant, steigt aber seit 2007 wieder signifikant auf über 1800 ppb.

Um die Freisetzung von Methan in die Umwelt zu minimieren, hat der Gesetzgeber in Deutschland beispielsweise für Biogasanlagen finanzielle Fördermaßnahmen eingerichtet, bei denen jedoch die maximal emittierbare Methanmenge im Abgas auf 0,2 Vol.-% der im Biogasprozess produzierten Methanmasse begrenzt wird. Um die in dem oben genannten Beispiel aufgeführte Methankonzentration auf den geforderten Wert von 0,2 Vol.-% zu reduzieren, wird das Abgas üblicherweise thermisch oder katalytisch oxidiert. Hierzu sind sog. FLOX-Brenner, d. h. Brenner mit einer flammenlosen Oxidation oder die katalytische Nachverbrennung (KNV) bekannt. Um die Nachverbrennung durchführen zu können, muss gegebenenfalls Biogas, Erdgas oder Flüssiggas als Zusatzbrennstoff beigemengt werden.

Als ein Problem dieser genannten Verfahren hat sich die mögliche Schwankung der Methankonzentration im Schwachgas herausgestellt, da beispielsweise der Anstieg der Methankonzentration von 1 Vol.-% auf 1,5 Vol.-% einen Brennwerteintrag von zusätzlich 50% bedeutet, wodurch eine nachgeschaltete Verwertungsanlage überhitzt, entsprechend gekühlt oder abgeschaltet werden muss. Um einen stabilen Betrieb des oben genannten Verfahrens zu gewährleisten, muss also eine konstante Methankonzentration eingehalten werden, was jedoch im Hinblick auf die natürlichen Quellen des Schwachgases, wie beispielsweise aus einem Biogasprozess oder als Grubengas, oft technisch nicht möglich ist. Als weiteres Problem, vor allem bei der katalytischen Oxidation, hat sich eine eventuelle und mögliche Verunreinigung des Schwachgases mit chemischen Elementen oder Verbindungen herausgestellt, welche den Katalysator zerstören oder beschädigen können.

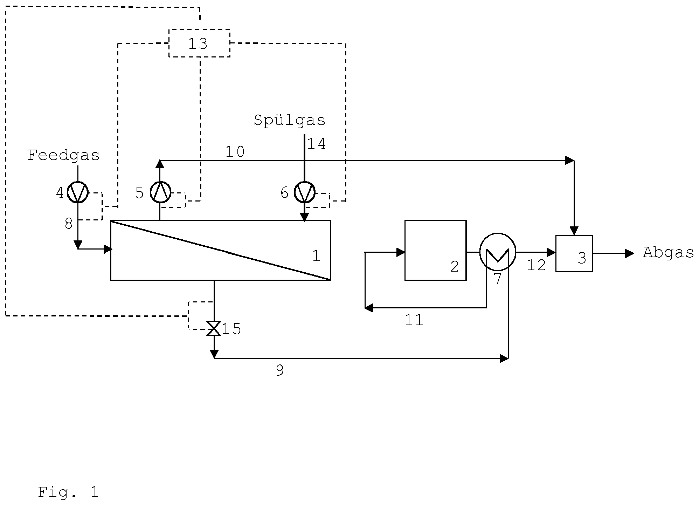

DE 10 2010 050214 offenbart eine Vorrichtung (Fig. 1), geeignet zur Verwertung von Schwachgas, durch Auftrennung in einer Membraneinheit (5), wobei das Retentat (4) mit einer Verwertungseinheit (6-9, 15) verbunden ist. Das Abgas der Verwertungseinheit (10) wird mit dem Permeat (3) vermischt (14) und einer Verbrennung (11) zugeführt. Die Eingangsleitung (2a) der Membraneinheit (5) weist einen Verdichter (2) auf.

Aufgabe der vorliegenden Erfindung ist es, ein Schwachgas derart von Methan zu befreien, dass es als den gesetzlichen Vorschriften entsprechendes Abgas in die Atmosphäre gelangen darf. Allgemein besteht bei Schwachgasen, wie Grubengas, das Problem, dass solche Gasgemische für den Betrieb von herkömmlichen Verwertungseinheiten, wie Gasmotoren oder Brenner, nicht direkt verwendet werden können. Grubengase enthalten im allgemeinen Methan, CO₂, CO, Stickstoff und fast keinen Sauerstoff. Als mögliche Gaszusammensetzung kann beispielsweise etwa 20 Vol.-% Methan, 15 Vol.-% CO₂ und 65 Vol.-% Stickstoff angenommen werden. Wenn bei einem solchen Gasgemisch der Anteil an CO₂ reduziert, beispielsweise halbiert, wird, und stattdessen Sauerstoff im Gasgemisch vorgesehen werden kann, ist das derart erhaltene Gasgemisch für den Betrieb von herkömmlichen Verwertungseinheiten geeignet. Wird dieser Austauschprozess verfahrenstechnisch durch eine Membraneinheit herbeigeführt, bleibt allerdings das Problem der Entsorgung des Permeats, welches durch seinen Gehalt an Methan aufgrund gesetzlicher Vorschriften nachbehandelt werden muss, bestehen.

Die obgenannte Aufgabe wird erfindungsgemäß dadurch gelöst, dass in einem Verfahren zur Verwertung von Schwachgas, umfassend die Verringerung des CO₂-Anteils im Schwachgas und/oder den Austausch von Gasanteilen im Schwachgas gegen O₂ in einer Membrantrenneinheit und anschließender Verwertung des Retentats in einer der Membrantrenneinheit retentatseitig nachgeschalteten Verwertungseinheit, das Permeat der Membrantrenneinheit demheißen Abgas der Verwertungseinheit beigemengt und nachoxidiert wird. Das Permeat enthält noch ausreichend Sauerstoffüberschuss um das restliche, in dem Permeatstrom gelangte Methan durch das Einblasen des gesamten Permeats in den etwa 850 °C bis 950 heißen Abgasstrom der Verwertungseinheit zu oxidieren, gleichzeitig wird dabei das Abgas gekühlt. Die kombinierten Abgase nach Verbrennung des Permeats enthalten bei optimaler Oxidation praktisch lediglich 0 Vol.-% Methan, in jedem Fall werden damit jedoch die gesetzlichen Vorschriften eingehalten und der kombinierte Abgasstrom kann daher problemlos in die Atmosphäre abgelassen werden.

Vorzugsweise wird im erfindungsgemäßen Verfahren die Partialdruckdifferenz von beispielsweise Methan und/oder CO₂ zwischen Permeat und Retentat in der Membrantrenneinheit gesteigert, entweder durch Druckbeaufschlagung des Feedgases, etwa indem der Membrantrenneinheit ein Verdichter oder Kompressor vorgeschaltet wird, oder alternativ kann die Steigerung der Partialdruckdifferenz auch durch permeatseitige Spülung der Membrantrenneinheit mit einem geeigneten Gas oder Gasgemisch, wie beispielsweise Luft, Stickstoff, einem Stickstoff/Sauerstoff Gemisch oder aber auch Methan bzw. Sauerstoff, vorzugsweise jedoch mit Luft, erfolgen. Bei Vorschalten eines Verdichters oder Kompressors zur Druckbeaufschlagung des Feedgases wird der Partialdruck der Gaskomponenten retentatseitig erhöht, auf der weitestgehend drucklosen Permeatseite bleibt der Partialdruck der Gaskomponenten unverändert, sodass sich die Partialdruckdifferenz und damit die Trennleistung der Membrantrenneinheit erhöht. Bei der zweiten Verfahrensvariante wird durch das Spülgas permeatseitig das permeierte Gasgemisch beschleunigt abtransportiert, wodurch die Partialdruckdifferenz ebenfalls steigt. Für das Spülgas kann auch ein Verdichter oder Kompressor vorgesehen sein, welcher im Betrieb jedenfalls weniger Energie benötigt als ein der ganzen Membrantrenneinheit vorgeschalteter Verdichter oder Kompressor. Bei der Verwertung bzw. Behandlung von Grubengas als Schwachgas und der Verwendung von Luft als Spülgas kann bei geeigneten Verfahrensbedingungen der Methangehalt im Permeat so niedrig gehalten werden, dass das Permeat weniger als 0,2 Vol.-% Methan, bezogen auf den Methaneintrag, aufweist und damit den gesetzlichen Vorschriften entspricht, so dass es ohne vorherige Nachoxidation in die Atmosphäre abgelassen werden kann. Auch diese Ausführungsform fällt unter den Gegenstand der vorliegenden Erfindung.

Bei Verwendung von Hohlfasermembranen sind im vorliegenden Verfahren die Fasern sowohl innen als auch alternativ außen mit Feedgas beaufschlagbar, je nachdem wo der Druckverlust verfahrenstechnisch besser (d.h. kleiner) ist. Dies bedeutet, dass im erfindungsgemäßen Verfahren bei Verwendung von Hohlfasermembranen entweder Schwachgas in den Fasern geführt werden kann oder das Schwachgas aussen geführt wird. Vorzugsweise wird bei großen zu verwertenden Mengen an Schwachgas der Druck vor der Membrantrenneinheit aufgebaut, bei kleinen Mengen ist eine Saugleistung durch einen vorzugsweise permeatseitig angeordneten Verdichter oder Kompressor gewährleistet.

Mit einem durch das erfindungsgemäße Verfahren an Methan angereicherten Schwachgas können ohne weiteres geeignete Verwertungseinheiten, wie beispielsweise Gasmotoren oder Brenner, kostengünstiger, stabiler und in einem breiteren Bereich der Methankonzentration betrieben werden. Die gleiche Grundidee wie für Gasmotoren ist auch bei Brennern als Verwertungseinheit anwendbar, auch hier kann das Permeat der Membrantrenneinheit in den Abgasstrom des Brenners eingespeist und dadurch nachoxidiert und von restlichem Methan befreit werden. Da die Zieltemperatur für die Einspeisung von Retentat in die Verwertungseinheit bei etwa 250 - 450 °C bei etwa 10 Vol.-% Methan liegt, wird gemäß einer bevorzugten Ausführungsform der vorliegenden Erfindung das Retentat mittels des Abgasstromes der Verwertungseinheit vorgewärmt und erst dann in die Verwertungseinheit eingespeist. Es ist jedenfalls darauf zu achten, dass, wenn die Einspeisung des Retentats in die Verwertungseinheit zu heiß erfolgt, das Abgas nach der thermischen Verwertungseinheit durch die zusätzliche Oxidation von im Permeat verbliebenen Methan viel zu heiß wird.

Vorzugsweise wird beim erfindungsgemäßen Verfahren im Feedgas und Permeat der Membrantrenneinheit mindestens ein Parameter zumindest einer Gaskomponente gemessen, mit einem Sollwert verglichen und über die ermittelten Werte jeweils im Feedgas- bzw. Permeatstrom vorgesehene Verdichter oder Kompressoren angesteuert. Die Ansteuerung kann dabei beispielsweise mittels einer geeigneten Stelleinrichtungen erfolgen, die mit den jeweiligen Sensoren zur Ermittlung eines Gasparameters verbunden ist und in welcher die Datenverarbeitung beispielsweise mittels einer CPU erfolgt.

Gemäß einer bevorzugten Ausführungsform der vorliegenden Erfindung wird im Feedgas und Spülgas, besonders bevorzugt in Feedgas, Spülgas und Permeat der Membrantrenneinheit mindestens ein Parameter, z.B. der Partialdruck, die Konzentration, der Druck, die Durchflussmenge oder überhaupt die chemische Natur, zumindest einer Gaskomponente, z.B. von Stickstoff, Methan und/oder CO₂, gemessen, mit einem Sollwert verglichen und über die ermittelten Werte mittels beispielsweise einer geeigneten Stelleinrichtung wie zuvor erwähnt jeweils im Feedgas- bzw. Spülgasstrom vorgesehene Verdichter oder Kompressoren angesteuert.

Weiters ist günstig, wenn nach der Membrantrenneinheit in der retentatseitigen Zuleitung zur Verwertungseinheit ein Regelventil vorgesehen ist, wobei dem Regelventil ebenfalls ein Sensor zur Ermittlung mindestens eines Parameters, z.B. des Partialdrucks, der Konzentration, des Drucks, der Durchflussmenge oder überhaupt der chemische Natur, zumindest einer Gaskomponente im Retentatstrom zugeordnet sein kann, welches Regelventil ebenfalls von der erwähnten zentralen Stelleinrichtung betätigt werden kann.

Gemäß einem weiteren Aspekt betrifft die vorliegende Erfindung eine Vorrichtung zur Verwertung von Schwachgas durch Auftrennung eines Feedgases mittels Gaspermeation in Retentat und Permeat mit mindestens einer Membrantrenneinheit mit einer Gaseingangsleitung, einer Retentatausgangsleitung und einer Permeatausgangsleitung, wobei die Retentatausgangsleitung mit einer Verwertungseinheit und die Verwertungseinheit abgasseitig über eine Leitung mit einem Nachbrenner leitungsmäßig verbunden ist, welche dadurch gekennzeichnet ist, dass die Membrantrenneinheit permeatseitig eine Permeatausgangsleitung aufweist, welche mit einem im Abgasstrom der Verwertungseinheit angeordneten Nachbrenner leitungsmäßig verbunden ist.

Vorzugsweise ist vorgesehen, dass in der Retentatausgangsleitung ein Wärmetauscher vorgesehen ist, welcher über die Leitung mit der Verwertungseinrichtung verbunden ist, wobei der Wärmetauscher im Abgasstrom der Verwertungseinrichtung angeordnet ist. Mittels des Wärmetauschers kann so der Retentatstrom der Membrantrenneinrichtung vor Einspeisung in die Verwertungseinrichtung auf eine bevorzugte Temperatur von beispielsweise etwa 250 - 450 °C bei etwa 10 % Methangehalt vorgewärmt werden.

Bei einer solchen Vorrichtung ist vorzugsweise vorgesehen, dass die Membrantrenneinheit permeatseitig eine Spülgaseingangsleitung aufweist und/oder in der Gaseingangsleitung ein Verdichter oder Kompressor vorgesehen ist. Mittels des Spülgases kann, wie bereits zuvor erwähnt, die Partialdruckdifferenz einzelner Gasbestandteile verschoben werden.

Weiters ist günstig, wenn in der Permeatausgangsleitung und/oder in der Spülgaseingangsleitung jeweils ein Verdichter oder Kompressor und/oder vorgesehen ist bzw. sind.

Besonders bevorzugt ist, wenn bei der erfindungsgemäßen Vorrichtung in der Gaseingangsleitung und in der Spülgaseingangsleitung, besonders bevorzugt in der Gaseingangsleitung, in der Spülgaseingangsleitung und in der Permeatausgangsleitung, jeweils Gassensoren vorgesehen sind, welche mit einer Stelleinrichtung zur Steuerung bzw. Regelung der Verdichter oder Kompressoren verbunden sind.

Gemäß einer weiteren Ausführungsform der vorliegenden Erfindung ist in der Retentatausgangsleitung ein Stellventil vorgesehen, dass vorzugsweise mit der Stelleinrichtung verbunden ist.

Die vorliegende Erfindung wird anhand der nachfolgenden Figur näher erläutert, ohne auf diese eingeschränkt zu sein.

Fig. 1 zeigt eine erfindungsgemäße Vorrichtung mit einer Membrantrenneinheit 1 mit einer Gaseingangsleitung 8 zur Zuführung des Feedgases samt darin angeordnetem Verdichter 4, einer Retentatausgangsleitung 9 mit einem darin angeordnetem Stellventil 15, einer Permeatausgangsleitung 10 samt darin angeordnetem Verdichter 5 und einer Spülgaseingangsleitung 14 samt darin angeordnetem Verdichter 6. Die Retentatausgangsleitung 9 ist mit einem direkt oder indirekt im Abgasstrom einer Verwertungseinheit 2 angeordneten Wärmetauscher 7 verbunden, vorgewärmtes Retentat wird dann vom Wärmetauscher 7 über die Leitung 11 der Verwertungseinheit 2, beispielsweise einem Gasmotor oder einem Brenner, zugeführt, wobei das heiße Abgas der Verwertungseinheit über den Wärmetauscher 7 und die Leitung 12 in einen Nachbrenner 3 geleitet wird. Die Permeatausgangsleitung 10 ist ebenfalls mit dem Nachbrenner 3 verbunden, in welchem es zusammen mit dem (durch den Wärmetauscher 7 leicht abgekühlten) Abgasstrom der Verwertungseinheit 2 zur nachhaltigen Entfernung von noch vorhandenem Methan nachoxidiert bzw. verbrannt wird. In der Gaseingangsleitung 8, in der Spülgaseingangsleitung 14, in der Permeatausgangsleitung 10 und in der Retentatausgangsleitung 9 sind jeweils Gassensoren vorgesehen, welche mit der Stelleinrichtung 13 zur leistungsmäßigen Steuerung bzw. Regelung der Verdichter oder Kompressoren 4, 5 und 6 bzw. zum Öffnen und Schließen des Stellventils 15 verbunden sind.

## Patentansprüche

1. Verfahren zur Verwertung von Schwachgas, umfassend die Verringerung des CO₂-Anteils im Schwachgas und/oder den Austausch von Gasanteilen im Schwachgas gegen O₂ in einer Membrantrenneinheit und anschließender Verwertung des Retentats in einer der Membrantrenneinheit retentatseitig nachgeschalteten thermischen Verwertungseinheit, wie Gasmotor oder Brenner, **dadurch gekennzeichnet, dass** das Permeat der Membrantrenneinheit dem heißen Abgas der Verwertungseinheit beigemengt und nachoxidiert wird.

2. Verfahren nach Anspruch 1, **dadurch gekennzeichnet, dass** die Partialdruckdifferenz zwischen Permeat und Retentat in der Membrantrenneinheit durch Druckbeaufschlagung des Feedgases gesteigert wird.

3. Verfahren nach Anspruch 1 oder 2, **dadurch gekennzeichnet, dass** die Partialdruckdifferenz zwischen Permeat und Retentat durch permeatseitige Spülung der Membrantrenneinheit mit einem geeigneten Gas oder Gasgemisch gesteigert wird.

4. Verfahren nach einem der Ansprüche 1 bis 3, **dadurch gekennzeichnet, dass** das Retentat vor Einspeisung in die Verwertungseinheit vorgewärmt wird, vorzugsweise auf eine Temperatur von etwa 250 - 450 °C.

5. Verfahren nach einem der Ansprüche 1 bis 4, **dadurch gekennzeichnet, dass** im Feedgas und Permeat der Membrantrenneinheit mindestens ein Parameter zumindest einer Gaskomponente gemessen, mit einem Sollwert verglichen und über die ermittelten Werte jeweils im Feedgas- bzw. Permeatstrom vorgesehene Verdichter oder Kompressoren angesteuert werden.

6. Verfahren nach einem der Ansprüche 3 bis 5, **dadurch gekennzeichnet, dass** im Feedgas und Spülgas, besonders bevorzugt in Feedgas, Spülgas und Permeat der Membrantrenneinheit mindestens ein Parameter zumindest einer Gaskomponente gemessen, mit einem Sollwert verglichen und über die ermittelten Werte jeweils im Feedgas- , Permeat- bzw. Spülgasstrom vorgesehene Verdichter oder Kompressoren angesteuert werden.

7. Vorrichtung zur Durchführung des Verfahrens nach einem der Ansprüche 1 bis 6 zur Verwertung von Schwachgas durch Auftrennung eines Feedgases mittels Gaspermeation in Retentat und Permeat mit mindestens einer Membrantrenneinheit (1) mit einer Gaseingangsleitung (8), einer Retentatausgangsleitung (9) und einer Permeatausgangsleitung (10), wobei die Retentatausgangsleitung (9) mit einer thermischen Verwertungseinheit (2), wie Gasmotor oder Brenner, und die Verwertungseinheit (2) abgasseitig über eine Leitung (12) mit einem Nachbrenner (3) leitungsmäßig verbunden ist, **dadurch gekennzeichnet, dass** die Membrantrenneinheit (1) permeatseitig eine Permeatausgangsleitung (10) aufweist, welche mit einem im Abgasstrom der Verwertungseinheit (2) angeordneten Nachbrenner (3) leitungsmäßig verbunden ist..

8. Vorrichtung nach Anspruch 7, **dadurch gekennzeichnet, dass** in der Retentatausgangsleitung (9) ein Wärmetauscher (7) vorgesehen ist, welcher über die Leitung (11) mit der Verwertungseinrichtung (2) verbunden ist, wobei der Wärmetauscher (7) im Abgasstrom (12) der Verwertungseinrichtung (2) angeordnet ist.

9. Vorrichtung nach Anspruch 7 oder 8, **dadurch gekennzeichnet, dass** die Membrantrenneinheit (1) permeatseitig eine Spülgaseingangsleitung (14) aufweist

10. Vorrichtung nach einem der Ansprüche 7 bis 9, **dadurch gekennzeichnet, dass** in der Gaseingangsleitung (8) ein Verdichter oder Kompressor (4) vorgesehen ist.

11. Vorrichtung nach einem der Ansprüche 7 bis 10, **dadurch gekennzeichnet, dass** in der Permeatausgangsleitung (10) und/oder in der Spülgaseingangsleitung (14) jeweils ein Verdichter oder Kompressor (5) und/oder (6) vorgesehen ist bzw. sind.

12. Vorrichtung nach einem der Ansprüche 7 bis 11, **dadurch gekennzeichnet, dass** in der Gaseingangsleitung (8) und in der Spülgaseingangsleitung (14), besonders bevorzugt in der Gaseingangsleitung (8), in der Spülgaseingangsleitung (14) und in der Permeatausgangsleitung (10), jeweils Gassensoren vorgesehen sind, welche mit einer Stelleinrichtung (13) zur Steuerung bzw. Regelung der Verdichter oder Kompressoren (4), (5) und/oder (6) verbunden sind.

13. Vorrichtung nach Anspruch 12, **dadurch gekennzeichnet, dass** in der Retentatausgangsleitung (9) ein Stellventil (15) vorgesehen ist, dass vorzugsweise mit der Stelleinrichtung (13) verbunden ist.

## Claims

1. Method for recovering lean gas, comprising reducing the CO₂ portion in the lean gas and/or exchanging gas portions in the lean gas for O₂ in a membrane separation unit and subsequently recovering the retentate in a thermal recovery unit arranged downstream of the membrane separation unit on the retentate side, such as a gas engine or burner, **characterised in that** the permeate of the membrane separation unit is mixed with the hot exhaust gas from the recovery unit and is post-oxidized.

2. Method according to claim 1, **characterised in that** the partial pressure difference between the permeate and the retentate in the membrane separation unit is increased by pressurising the feed gas.

3. Method according to either claim 1 or claim 2, **characterised in that** the partial pressure difference between the permeate and the retentate is increased by flushing the membrane separation unit on the permeate side using a suitable gas or gas mixture.

4. Method according to any of claims 1 to 3, **characterised in that** the retentate is preheated before feeding into the recovery unit, preferably to a temperature of approximately 250-450°C.

5. Method according to any of claims 1 to 4, **characterised in that** at least one parameter of at least one gas component is measured in the feed gas and the permeate of the membrane separation unit, said parameter is compared with a target value, and the compactors or compressors provided in the feed gas flow and/or permeate flow can be controlled in each case by means of the determined values.

6. Method according to any of claims 3 to 5, **characterised in that** at least one parameter of at least one gas component is measured in the feed gas and flushing gas, particularly preferably in the feed gas, flushing gas and permeate of the membrane separation unit, said parameter is compared with a target value, and the compactors or compressors provided in the feed gas flow, permeate flow and/or flushing gas flow can be controlled in each case by means of the determined values.

7. Device for carrying out the method according to any of claims 1 to 6 for recovering lean gas by separating a feed gas into a retentate and a permeate by means of gas permeation using at least one membrane separation unit (1) having a gas inlet line (8), a retentate outlet line (9) and a permeate outlet line (10), the retentate outlet line (9) being connected to a thermal recovery unit (2), such as a gas engine or burner, and the recovery unit (2) being flow-connected to an afterburner (3) on the exhaust gas side via a line (12), **characterised in that** the membrane separation unit (1) has a permeate outlet line (10) on the permeate side, which line is flow-connected to an afterburner (3) arranged in the exhaust gas stream of the recovery unit (2).

8. Device according to claim 7, **characterised in that** a heat exchanger (7) is provided in the retentate outlet line (9), which heat exchanger is connected to the recovery apparatus (2) via the line (11), the heat exchanger (7) being arranged in the exhaust gas stream (12) of the recovery apparatus (2).

9. Device according to either claim 7 or claim 8, **characterised in that** the membrane separation unit (1) has a flushing gas inlet line (14) on the permeate side.

10. Device according to any of claims 7 to 9, **characterised in that** a compactor or compressor (4) is provided in the gas inlet line (8).

11. Device according to any of claims 7 to 10, **characterised in that** a compactor or compressor (5) and/or (6) is/are provided in each case in the permeate outlet line (10) and/or in the flushing gas inlet line (14).

12. Device according to any of claims 7 to 11, **characterised in that** gas sensors are provided in the gas inlet line (8) and in the flushing gas inlet line (14), particularly preferably in the gas inlet line (8), in the flushing gas inlet line (14) and in the permeate outlet line (10), which gas sensors are connected to a control means (13) for open-loop or closed-loop control of the compactors or compressors (4), (5) and/or (6).

13. Device according to claim 12, **characterised in that** a control valve (15) is provided in the retentate output line (9), which control valve is preferably connected to the control means (13).

## Revendications

1. Procédé pour valoriser un gaz pauvre, comprenant la réduction de la fraction de CO₂ dans le gaz pauvre et/ou le remplacement de fractions de gaz dans le gaz pauvre par de l'O₂ dans une unité de séparation à membrane et ensuite la valorisation du rétentat dans une unité de valorisation thermique montée en aval de l'unité de séparation à membrane côté rétentat, telle qu'un moteur à gaz ou brûleur, **caractérisé en ce que** le perméat de l'unité de séparation à membrane est ajouté aux gaz d'échappement brûlants de l'unité de valorisation et soumis à une post-oxydation.

2. Procédé selon la revendication 1, **caractérisé en ce que** la différence de pression partielle entre le perméat et le rétentat dans l'unité de séparation à membrane est augmentée par la sollicitation en pression du gaz d'alimentation.

3. Procédé selon la revendication 1 ou 2, **caractérisé en ce que** la différence de pression partielle entre le perméat et le rétentat est augmentée par balayage côté perméat de l'unité de séparation à membrane avec un gaz ou mélange de gaz approprié.

4. Procédé selon l'une quelconque des revendications 1 à 3, **caractérisé en ce que** le rétentat est préchauffé avant d'être injecté dans l'unité de valorisation, de préférence à une température d'environ 250 - 450 °C.

5. Procédé selon l'une quelconque des revendications 1 à 4, **caractérisé en ce qu'**au moins un paramètre d'au moins un composant de gaz est mesuré dans le gaz d'alimentation et le perméat de l'unité de séparation à membrane, comparé à une valeur théorique et des compresseurs prévus respectivement dans le courant de gaz d'alimentation ou de perméat sont commandés par l'intermédiaire des valeurs déterminées.

6. Procédé selon l'une quelconque des revendications 3 à 5, **caractérisé en ce qu'**au moins un paramètre d'au moins un composant de gaz est mesuré dans le gaz d'alimentation et gaz de balayage, de manière particulièrement préférée dans le gaz d'alimentation, gaz de balayage et perméat de l'unité de séparation à membrane, comparé à une valeur théorique et des compresseurs prévus respectivement dans le courant de gaz d'alimentation, de perméat ou gaz de balayage sont commandés par l'intermédiaire des valeurs déterminées.

7. Dispositif pour la mise en œuvre du procédé selon l'une quelconque des revendications 1 à 6 permettant la valorisation d'un gaz pauvre par séparation d'un gaz d'alimentation au moyen d'une perméation de gaz dans le rétentat et le perméat avec au moins une unité de séparation à membrane (1) avec une conduite d'entrée de gaz (8), une conduite de sortie de rétentat (9) et une conduite de sortie de perméat (10), dans lequel la conduite de sortie de rétentat (9) est reliée par des conduites à une unité de valorisation (2) thermique, telle qu'un moteur à gaz ou brûleur, et l'unité de valorisation (2), à un dispositif de post-combustion (3) côté gaz d'échappement par l'intermédiaire d'une conduite (12), **caractérisé en ce que** l'unité de séparation à membrane (1) présente côté perméat une conduite de sortie de perméat (10), laquelle est reliée par des conduites à un dispositif de post-combustion (3) disposé dans le courant des gaz d'échappement de l'unité de valorisation (2).

8. Dispositif selon la revendication 7, **caractérisé en ce qu'**un échangeur de chaleur (7), lequel est relié au dispositif de valorisation (2) par l'intermédiaire de la conduite (11), est prévu dans la conduite de sortie de rétentat (9), dans lequel l'échangeur de chaleur (7) est disposé dans le courant de gaz d'échappement (12) du dispositif de valorisation (2).

9. Dispositif selon la revendication 7 ou 8, **caractérisé en ce que** l'unité de séparation à membrane (1) présente côté perméat une conduite d'entrée de gaz de balayage (14).

10. Dispositif selon l'une quelconque des revendications 7 à 9, **caractérisé en ce qu'**un compresseur (4) est prévu dans la conduite d'entrée de gaz (8).

11. Dispositif selon l'une quelconque des revendications 7 à 10, **caractérisé en ce que** respectivement un compresseur (5) et/ou 6 est ou sont prévus dans la conduite de sortie de perméat (10) et/ou dans la conduite d'entrée de gaz de balayage (14).

12. Dispositif selon l'une quelconque des revendications 7 à 11, **caractérisé en ce que** respectivement des capteurs de gaz, lesquels sont reliés à un dispositif de réglage (13) destiné à commander ou réguler les compresseurs (4), (5) et/ou (6), sont prévus dans la conduite d'entrée de gaz (8) et dans la conduite d'entrée de gaz de balayage (14), de manière particulièrement préférée dans la conduite d'entrée de gaz (8), dans la conduite d'entrée de gaz de balayage (14) et dans la conduite de sortie de perméat (10).

13. Dispositif selon la revendication 12, **caractérisé en ce qu'**une soupape de réglage (15), qui est de préférence reliée au dispositif de réglage (13), est prévue dans la conduite de sortie de rétentat (9).
